**Europäisches Patentamt**

**European Patent Office**

**Office européen des brevets**

(19)

(11) Veröffentlichungsnummer: **0 061 569**
**B1**

(12)

# EUROPÄISCHE PATENTSCHRIFT

(45) Veröffentlichungstag der Patentschrift:
**27.06.84**

(21) Anmeldenummer: **82100815.8**

(22) Anmeldetag: **04.02.82**

(51) Int. Cl.³: **F 16 L 21/00**

(54) **Muffe.**

(30) Priorität: **27.03.81 DE 3112258**

(43) Veröffentlichungstag der Anmeldung:
**06.10.82 Patentblatt 82/40**

(45) Bekanntmachung des Hinweises auf die Patenterteilung:
**27.06.84 Patentblatt 84/26**

(84) Benannte Vertragsstaaten:
**AT BE CH DE FR GB IT LI NL SE**

(56) Entgegenhaltungen:
**DE - A - 2 319 908**
**DE - B - 1 211 045**
**DE - C - 1 281 759**
**DE - C - 2 109 566**
**DE - U - 7 037 139**
**US - A - 3 682 503**
**US - A - 3 796 446**
**US - A - 3 840 053**

(73) Patentinhaber: **WOCO Franz-Josef Wolf & Co.,
Sprudelallee 19, D-6483 Bad Soden-Salmünster (DE)**

(72) Erfinder: **Wolf, Franz Josef, Sprudelallee 19, D-6483 Bad
Soden-Salmünster (DE)**
Erfinder: **Lauer, Hansjörg, Marburger Strasse 5,
D-6483 Bad Soden-Salmünster (DE)**

(74) Vertreter: **Jaeger, Klaus, Dr. et al, JAEGER & PARTNER
Patentanwälte Bergstrasse 48 1/2,
D-8035 München-Gauting (DE)**

Beschreibung

Die Erfindung betrifft eine Muffe der im Oberbegriff des Anspruchs 1 genannten Art.

Muffen dieser Art werden insbesondere, jedoch nicht ausschließlich zur Reparatur von Rohrleitungen verwendet. Generell sind solche Muffen überall dort einsetzbar, wo zwei zumindest im wesentlichen koaxial zueinander angeordnete muffenlose Rohrenden, sogenannte Spitzenden, unter Stirnstoß dicht miteinander verbunden werden sollen.

Eine Muffe der eingangs genannten Art ist aus der Druckschrift DE-C-1 281 759 bekannt. Die bekannte Muffe besteht aus einer Gummimanschette zur Aufnahme der beiden miteinander zu verbindenden Rohrenden, einer die Manschette außen umschließenden axial geschlitzten Kunststoffhülse und Spannbändern, die zwischen radialen Führungsrippen eingelegt sind, so daß sie gegen eine axiale Verschiebung gesichert sind. Die Muffe weist insgesamt zwei Spannbänder auf, die jeweils unmittelbar am Rand der Hülse angeordnet sind. Die jeweils axial äußere Führungsrippe für das Spannband ist als unmittelbar am äußeren Rand der Hülse flanschartig nach radial außen vorspringender Radialsteg ausgebildet. Bei zusammengesetzter Muffe ist die Gummimanschette durch einen axial zentral angeordneten Ringnut-Ringfeder-Eingriff gegen eine axiale Verschiebung und damit gegen ein Herausfallen aus der Hülse gesichert. Diese Art der axialen Fixierung der Gummimanschette ist unzureichend. Bei nicht gespannten Spannbändern und nicht vorgespannter Hülse besteht die Gefahr, daß die relativ lose in der Hülse liegende Manschette aus dieser herausfällt und verloren geht. Die Handhabung der Muffe als Einheit wird dadurch beeinträchtigt. Mindestens ebensogroß ist jedoch die Gefahr einer axialen Verschiebung der Hülse und der Manschette gegeneinander beim Herstellen der Rohrverbindung. Eine genaue axiale Relativfixierung zwischen der Hülse und der Muffe ist jedoch für eine zuverlässige Dichtheit der Muffe eine unabdingbare Voraussetzung.

Bei der aus der Druckschrift DE-B-1 211 045 bekannten Muffe erfolgt die axiale Fixierung der Gummimanschette in der Hülse dadurch, daß der axial geschlitzte Muffenrand abwechselnd radial einwärts und radial auswärts aufgebogene Stegabschnitte aufweist. Die radial abwärts gebogenen Stegabschnitte dienen der axialen Fixierung der Gummimanschette dadurch, daß sie nach Art eines Anschlagringes vor die Stirnflächen der Manschette greifen. Die radial auswärts aufgebogenen Stegabschnitte dienen als Führung oder Anschlag für die Spannbänder und verhindern, daß diese nach axial auswärts von der im wesentlichen tonnenförmigen Hülse abspringen.

Durch die radial einwärts gebogenen Stegabschnitte der vorstehend beschriebenen bekannten Muffe kann jedoch nicht verhindert werden, daß die Manschette bereits bei der geringsten radial einwärts gerichteten Verformung über den Innenrand der umgebogenen Stegabschnitte hinausspringt und damit ihre Fixierung verliert. Die Muffe ist damit gegen unbefugtes und unbeabsichtigtes Entfernen der Manschette aus der Hülse anfällig. Außerdem ist bei dieser Ausgestaltung der axialen Fixierung der Manschette in der Hülse auch nicht gewährleistet, daß bei der Herstellung der Rohrverbindung die einwärts gebogenen Stegabschnitte der Hülse an beiden Seiten wirklich bestimmungsgemäß gleich über die Stirnseiten der Manschette greifen und damit die vorbestimmte axiale Lage der Manschette und der Hülse zueinander eingehalten wird.

Eine deutlich bessere axiale Fixierung der Hülse und der Manschette gegeneinander wird bei der aus den Druckschriften DE-U-7 037 139 und DE-C-2 109 566 bekannten Muffe erreicht. Außenrandbereiche der Gummimanschette umgreifen die beiden einander gegenüberliegenden Außenränder der Hülse und werden durch die Spannbänder auf die Außenseite der Hülse gezwungen. Nachteilig bei dieser Anordnung ist, daß die Spannbänder »schwimmen«, d. h. ihre zur Dichtheit der Muffe erforderliche Spannkraft nicht direkt auf die formsteife Hülse und von dieser auf den Dichtungsbereich der Gummimanschette übertragen, sondern bereits gedämpft und gepuffert auf den Außenmantel der Hülse einwirken. Die mit dieser Muffe herstellbaren Rohrverbindungen verlieren damit an Sicherheit. Außerdem müssen, um ausreichende Radialkräfte aufzubringen, wesentlich stärkere Spannbänder, insbesondere aufwendigere Spannelemente für die Spannbänder, eingesetzt werden. Schließlich erfordert die aus den genannten Druckschriften bekannte Muffe in beiden Versionen einen relativ großen Einsatz an kostenaufwendigem Elastomer.

Angesichts dieses Standes der Technik liegt der Erfindung die Aufgabe zugrunde, eine Muffe der eingangs genannten Art zu schaffen, bei der die Manschette und die Hülse zu einer insbesondere axial ausreichend stabilisierten Einheit verbunden sind, ohne daß es hierzu eines übergroßen Einsatzes an Elastomer bedarf, und bei der die Spannbänder direkt auf der Außenfläche der Hülse aufliegen.

Zur Lösung dieser Aufgabe wird eine Muffe der im Oberbegriff des Anspruchs 1 genannten Art geschaffen, die erfindungsgemäß die im kennzeichnenden Teil des Anspruchs 1 genannten Merkmale aufweist.

Die Erfindung schafft also eine aus Manschette, Hülse und Spannbändern bestehende Muffe, bei der der radial nach außen vorspringende Radialsteg am Hülsenrand nicht der Führung der Spannbänder, sondern der axialen Fixierung und der Verbesserung der Gesamtsteifigkeit der Muffe dadurch dient, daß dieser Radialsteg von den Außenrändern der Manschette umgriffen wird, und zwar insbesondere in der Weise, daß der Radialsteg von einem ringartigen verstärkten Abschnitt der Manschette axial einspannend hintergriffen wird. Entscheidend ist dabei, daß der Ringabschnitt der Manschette nur unter Aufbringung einer signifikanten radial auswärts gerichteten Dehnkraft nach axial auswärts über den Radialsteg der Hülse gezogen werden kann. Die im konkreten Einzelfall jeweils gewünschte und benötigte Rückstellkraft des Ringabschnittes kann dabei in gebräuchlicher Weise durch eine entsprechende Dimensionierung der ringartigen Verstärkung eingestellt werden. Vorzugsweise weist dieser Ringabschnitt der Manschette aus diesem Grunde einen zumindest im wesentlichen kreisrunden oder quadratischen Querschnitt, genauer gesagt Schnurquerschnitt, auf. Der innere Ringdurchmesser dieses Ringabschnittes der Manschette ist vorzugsweise weiterhin so bemessen, daß er die Hülse unter radialer Vorspannung umschließt.

Die Muffe der Erfindung bildet auf diese Weise auch ohne Spannbänder eine feste Baueinheit, bei der insbesondere die Manschette und die Hülse axial fest gegeneinander fixiert sind. Die Muffe ist ohne die Gefahr einer Veränderung der axialen Sollage der Hülse und der Manschette zueinander problemlos transportierbar, handhabbar und zur Herstellung der Rohrverbindungen einsetzbar. Der Verbund zwischen Manschette und Hülse ist außerdem in besonders kostengünstiger Weise herzustellen, d. h. vormontierbar. Zur Herstellung dieses Verbundes brauchen weder die Spannbänder bereits angelegt oder gar in geschlossene Führungen eingezogen zu werden, noch braucht der Hülsenrand bei der Vormontage der Muffe verformt zu werden.

Die Manschette besteht vorzugsweise aus üblichen Gummiqualitäten, kann aber auch ohne weiteres aus entsprechenden Kunststoffen hergestellt werden, solange dies die Einsatzspezifikationen zulassen.

Die Spannbänder bestehen insbesondere aus Stahl, vor allem korrosionsfestem Stahl, oder aus zugfesten Kunststoffen, oder entsprechenden Verbundwerkstoffen. Die zum Spannen der Spannbänder verwendeten Spannmittel sind gebräuchlicher Art und in großer Vielzahl bekannt, so daß auf ihre nähere Erläuterung im Rahmen der Erfindung verzichtet wird.

Die Hülse besteht vorzugsweise aus einem Werkstoff, der der Hülse einerseits eine ausreichende Formsteifigkeit verleiht, andererseits aber die zur Überbrückung von Toleranzen und Unrundungen der miteinander zu verbindenden Rohrenden erforderliche Verformbarkeit behält. Unter diesen Gesichtspunkten besteht die Hülse vorzugsweise aus korrosionsbeständigem Stahlblech oder aus Kunststoff, insbesondere verstärktem Kunststoff.

Die Hülse weist ringförmige radial auswärts vorspringende Führungsrippen auf, die einstükkig an der Hülse angeformt oder aus dieser ausgeformt sind. Zwischen diesen Führungsrippen sind die Spannbänder eingelegt. Dabei liegt die axial jeweils äußerste Führungsrippe soweit nach axial einwärts vom Außenrand der Hülse entfernt, daß der Abstand zwischen dem Innenrand des Radialsteges am Hülsenrand und dem axial äußeren Rand dieser Führungsrippe mindestens etwa gleich groß wie die axiale Breite des ringartigen Abschnittes der Manschette ist.

Vorzugsweise weist die Hülse axiale Einschnitte auf, die sich vom Außenrand der Hülse her nach axial einwärts erstrecken, und zwar bis unter die Spannbänder, vorzugsweise in einer axialen Tiefe, die sich bis über die Spannbänder hinaus nach axial einwärts erstreckt. Diese Einschnitte dienen dem Zweck, auch große und sehr große Abweichungen der tatsächlichen Außendurchmesser der zu verbindenden Rohrenden von den Nenndurchmessern und auch stärkere Unrundungen der Rohrenden ohne Beeinträchtigung der Dichtheit der Rohrverbindung auffangen zu können.

Eine weitere Anpassungsfähigkeit an Abweichungen der Abmessungen der miteinander zu verbindenden Rohrenden von vorgegebenen Sollabmessungen bei gleichzeitig weiterer Stabilisierung der Muffe und eine spürbare Vormontageerleichterung und Montageerleichterung wird erzielt, wenn die Hülse nach einer Ausgestaltung der Erfindung nicht zylindrisch geschlossen, sondern als offenes Band ausgebildet ist, dessen Enden sich im Bereich einer an eines der beiden Enden angeformten Zunge überlappen, deren axiale Breite so bemessen ist, daß die Zunge zwischen zwei in den Randbereichen angeordneten Spannbändern verläuft, ohne an irgendeiner Stelle unter ein Spannband zu geraten. Die angeformte Zunge, mit der sich das offene Hülsenband überlappt, ist in axialer Richtung also schmaler als der Innenkantenabstand zwischen den beiden in den Außenrandbereichen der Hülse einander gegenüberliegenden ringförmigen Führungsrippen für die Spannbänder.

Die Erfindung ist im folgenden anhand von Ausführungsbeispielen in Verbindung mit der Zeichnung näher erläutert. Es zeigt

Fig. 1 in schematischer Teildarstellung und im Axialschnitt ein Ausführungsbeispiel einer Hülse der Muffe;

Fig. 2 in Draufsicht und in Teildarstellung das mit einer Zunge versehene Ende einer als offenes Band ausgebildeten Hülse der Muffe; und

Fig. 3 im Axialschnitt und in Teildarstellung ein einsatzfertig vormontiertes Ausführungsbeispiel der Muffe.

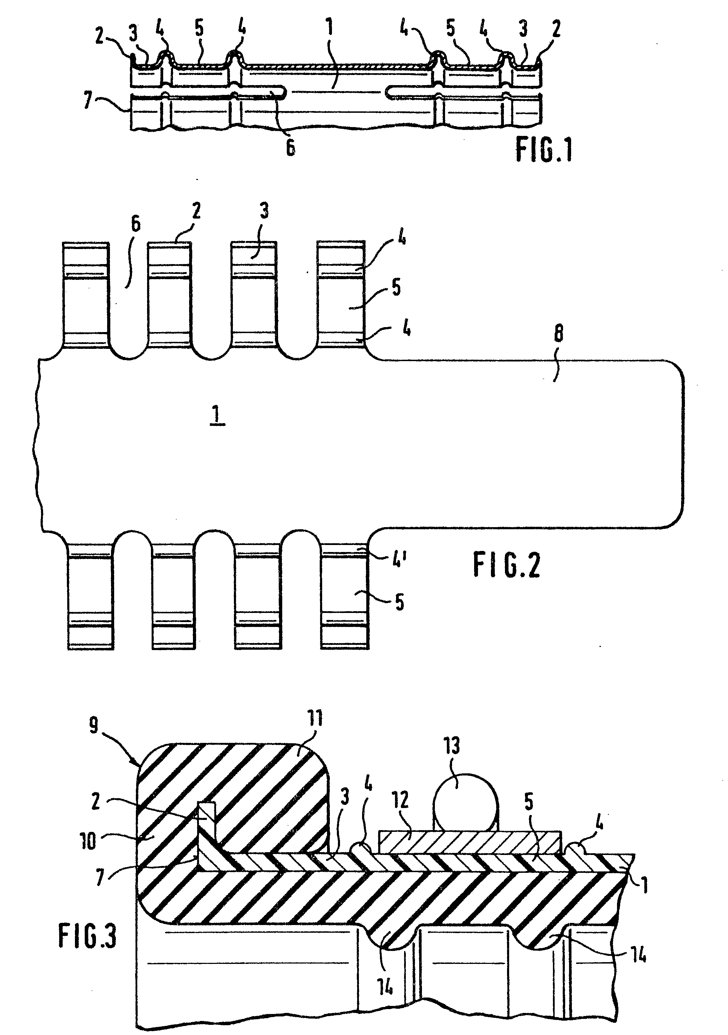

Das in der Fig. 1 gezeigte Ausführungsbeispiel einer Hülse 1 der Muffe der Erfindung ist eine zumindest im wesentlichen zylindrisch ausgebildete Hülse aus korrosionsbeständigem Stahlblech. Die Außenränder der Hülse sind unter Bildung von Radialstegen 2 zur Verankerung einer Manschette flanschartig nach radial außen umgebördelt. Nach axial einwärts schließt sich an den Radialsteg 2 jeweils ein glatt zylindrischer Abschnitt 3 des Mantels der Hülse 1 an, der der Aufnahme einer ringartigen Verstärkung der um den Radialsteg 2 herumgezogenen Manschette dient.

Auf der dem Radialsteg 2 axial gegenüberliegenden Seite wird der zylindrische Hülsenabschnitt 3 durch eine von zwei ringförmigen Führungsrippen 4 begrenzt, die als radial auswärts vorspringende Sicken ausgebildet sind. Zwischen den beiden ringförmigen Führungsrippen 4,4 ist wiederum ein glatt zylindrischer Hülsenabschnitt 5 ausgebildet, dessen axiale Breite zumindest im wesentlichen der Breite eines zwischen die beiden Führungsrippen 4 einzulegenden Spannbandes entspricht.

Die Hülse 1 weist weiterhin mit gleichem Winkelabstand voneinander über ihren gesamten Umfang verteilt, eine Reihe axialer Schlitze 6 auf, die sich vom Außenrand 7 der Hülse 1 nach axial einwärts bis hinter die zweite ringförmige Führungsrippe 4 erstrecken. Diese Axialschlitze 6 ermöglichen, daß die in den zylindrischen Abschnitten 5 um die Hülse 1 herumgelegten Spannbänder beim Anspannen eine Durchmesserverkleinerung der Hülse 1 bewirken können. Dies dient der Erzeugung eines radial einwärtsgerichteten Anpreßdruckes auf die innenliegende Gummimanschette zu Dichtzwecken.

Im Gegensatz zu den in Fig. 1 gezeigten Ausführungsbeispiel einer Hülse der Muffe ist in der Fig. 2 in Draufsicht ein Ende einer als offenes Band ausgebildeten Hülse 1 gezeigt. Die Hülse 1 besteht wiederum aus korrosionsbeständigem Stahlblech. Die Schlitze 6 des in der Fig. 2 gezeigten Ausführungsbeispiels der Hülse 1 sind wesentlich breiter als bei dem in Fig. 1 gezeigten Ausführungsbeispiel ausgelegt und weisen die gleiche Breite wie die zwischen zwei aufeinanderfolgenden Schlitze stehenbleibenden stegartigen oder fingerartigen Hülsenabschnitte auf, die im wesentlichen aus dem Radialsteg 2, dem ersten zylindrischen Abschnitt 3, den beiden Führungsrippen 4 und dem zwischen diesen beiden Führungsrippen ausgebildeten zylindrischen Abschnitt 5 gebildet werden.

An dem in der Fig. 2 rechts liegenden Ende des die Hülse 1 bildenden Bandes ist eine Zunge 8 ausgebildet, die sich, bezogen auf das die Hülse bildende Band, axial und, bezogen auf die zylindrische Hülse, in Umfangsrichtung so weit erstreckt, daß sie auch bei größtem zulässigem Umfang der Hülse für eine Stabilisierung ausreichend weit das gegenüberliegende Ende des Bandes überlappt, vorzugsweise insbesondere radial innerhalb, von außen gesehen also unterhalb des gegenüberliegenden Endes dieses überlappt. Dabei ist die Breite der Zunge 8 so bemessen, daß sie schmaler als der Abstand der beiden axial innersten Führungsrippen 4,4' voneinander ist. Dies gewährleistet, daß die Zunge in ihrer Verschiebbarkeit und Beweglichkeit in Umfangsrichtung nicht durch die angezogenen Spannbänder, die in den zylindrischen Abschnitten 5 liegen, beeinträchtigt wird. Eine solche Beweglichkeit fördert die Montagesicherheit und erleichtert den Montagevorgang.

Ein Ausführungsbeispiel der vollständigen Muffe der Erfindung ist im Axialschnitt und in Teildarstellung in der Fig. 3 gezeigt. Die Hülse 1 besteht aus Kunststoff und weist an ihrem Außenrand einen flanschartig angeformten Radialsteg 2 auf. Die Manschette 9 umgreift mit ihrem Außenrand 10 den Außenrand 7 und den Radialsteg 2 der Hülse 1, und zwar in der Weise, daß eine am Außenrand 10 der Manschette 9 angeformte ringartige Verstärkung 11 den Ringsteg 2 von axial innen her hintergreift. Der Ringsteg 2 ist zwischen dem Außenrand 10 und dem Ringabschnitt 11 der Manschette 9 axial eingespannt. Gegenüber dem zylindrischen Mantelabschnitt 3 der Hülse 1 weist der Ringabschnitt 11 der Manschette 9 außerdem eine radiale Vorspannung auf. Der Ringabschnitt 11 der Manschette 9 hat einen im wesentlichen quadratischen Querschnitt mit stark abgerundeten Kanten. Der Ringabschnitt 11 ist so dimensioniert, daß es einer beachtlichen Kraft bedarf, um den Ringabschnitt 11 radial auszuweiten.

Zwischen zwei radial auswärts vorspringenden angeformten ringförmigen Führungsrippen 4 ist ein Spannband 12 gegen axiale Verschiebung gesichert eingelegt, das durch schematisch angedeutete Spannmittel 13 im Sinne einer Radiusverkleinerung spannbar ist. Die durch diese Radiusverkleinerung erzeugte radial einwärts gerichtete Kraft wird direkt auf den zylindrischen Abschnitt 5 der Hülse 1 und von dieser Hülse 1 auf die Manschette 9 und auf an dieser ausgeformte Dichtungselemente 14 übertragen, die den Innenmantel der Manschette gegen den Außenmantel eines eingesteckten Rohrendes abdichten. Die Dichtungselemente 14 sind in dem hier gezeigten Ausführungsbeispiel als einfache Wulstringe dargestellt. Sie können in der Praxis selbstverständlich auch beliebige andere Form aufweisen, insbesondere auch lippenförmig ausgebildet sein.

**Patentansprüche**

1. Muffe zum dichten Verbinden muffenloser Rohrenden miteinander, bestehend aus einer gummielastischen Manschette (9) zur Aufnahme der Rohrenden, einer die Manschette außen umschließenden versteifenden Hülse (1), an deren Rändern flanschartig nach außen vorspringende Radialstege (2) ausgebildet sind, und mindestens einem mit Spannelementen (13) versehenen Spannband (12), das zwischen ringartigen Führungsrippen (4) eingelegt ist, die auf der Außenseite der Hülse (1) ausgebildet sind, dadurch gekennzeichnet, daß die Manschette (9) an jedem der beiden Enden der Hülse (1) den Außenrand (7) und den Radialsteg (2) der Hülse (1) umfaßt und den Radialsteg (2) mit einem verstärkten ringartigen Abschnitt (11) axial innen hintergreift und daß die axial jeweils äußerste Führungsrippe (4) des Spannbandes (12) axial neben dem ringartigen Abschnitt (11) der Manschette (9) angeordnet ist.

2. Muffe nach Anspruch 1, dadurch gekennzeichnet, daß der ringartige Abschnitt (11) der Manschette (9) zumindest im wesentlichen einen quadratischen oder kreisförmigen Querschnitt aufweist.

3. Muffe nach einem der Ansprüche 1 oder 2, dadurch gekennzeichnet, daß die Hülse (1) mit axialen Einschnitten (6) versehen ist, die sich von den beiden Außenrändern (7) der Hülse (1) her bis unter das oder die Spannbänder (9) nach innen erstrecken.

4. Muffe nach einem der Ansprüche 1 bis 3, dadurch gekennzeichnet, daß die Hülse (1) als offenes Band ausgebildet ist, an dessen einem Ende eine Zunge (8) angeformt ist, die in der zusammengesetzten Muffe das andere Ende des Hülsenbandes überlappt und schmaler als der Innenkantenabstand zwischen zwei in den einander gegenüberliegenden Außenrandbereichen der Hülse (1) angeordneten Spannband-Führungsrippen (4, 4') ist, und daß das Hülsenband nur im Bereich der Zunge (8) überlappt ist.

## Claims

1. A coupling for connecting pipe end without sockets sealingly, comprising a rubber-elastic sleeve member (9) for receiving the pipe ends, a stiffening sleeve (1) surrounding said sleeve member (9) at the outside and comprising outwardly protruding radial flanges (2) at its longitudinal ends, and at least one tightening strap (12) provided with tensing means (13), said tightening strap (12) being disposed between spaced ring like guide-ribs (4), formed on the outer surface of the stiffening sleeve (1) characterized in, that said sleeve-member (9) encircles the outer edge (7) and the radial flange (2) et each longitudinal end of said stiffening sleeve (1) and comprises a ring-like strenghtened section (11) extending such that said ringlike section grips onto the longitudinal inner sides of said radial flanges (2) and that said each guide rib (4) of said tightenings strap (12) which is positioned most outwardly in longitudinal direction as disposed longitudinally adjacent said ring-like section (11).

2. A coupling according to claim 1, wherein said ring-like section (11) of said sleeve member (9) has at least a cross section of substantially squareshaped or circular-shaped configuration.

3. A coupling according to claim 1 or 2, wherein the stiffening sleeve (1) comprises longitudinally extending slits (6) which extend from the longitudinal outer edges (7) of said stiffening sleeve (1) inwardly to the bottom side of said one or more tightening straps (12).

4. A coupling according to one of the claims 1 to 3, wherein said stiffening sleeve (1) is formed as an open band with an integrally formed tongue (8) at one end which overlaps the other end of said band when said coupling being assembled and which is longitudinally narrower than the distance between two opposed guide ribs (4) of said tightening straps (12) arranged in opposite longitudinal edge regions of said stiffening sleeve (1) and that the band overlaps only in the region of said tongue (8).

## Revendications

1. Manchon pour le raccordement des extrémités des canalisations sans manchon et comportant une manchette en caoutchouc élastique (9) recevant l'extrémité des canalisations, une gaine (1) à effet raidisseur qui enrobe la manchette et dont les bords présentent des nervures radiales (2) en forme de collerette saillant vers l'extérieur, ainsi qu'une bande de serrage (12) équipee d'éléments de serrage (13), qui est placée entre des nervures de guidage annulaires (4) se trouvant sur la face extérieure de la gaine (1), caractérisé en ce que, sur chacune des extrémités de la gaine (1), la manchette (9) enrobe le bord extérieur (7) et la nervure radiale (2) de cette gaine (1) en s'appliquant, dans le sens axial et par l'intérieur, contre cette nervure radiale à l'aide d'une section annulaire renforcée (11), et en ce que la nervure de guidage (4) de la bande de serrage (12) placée le plus à l'extérieur, vue dans le sens axial, se trouve ainsi à côté de la section annulaire (11) de la manchette (9).

2. Manchon selon la revendication 1, caractérisé en ce que la section annulaire (11) de la manchette (9) présente une section transversale essentiellement carrée ou circulaire.

3. Manchon selon l'une des revendications 1 ou 2, caractérisé en ce que la gaine (1) comporte des entailles (6) pratiquées dans le sens axial, qui, partant des deux bords extérieurs (7), s'étendent vers l'intérieur jusqu'audessous de la ou des bandes de serrage (9).

4. Manchon selon l'une des revendications 1 à 3, caractérisé en ce que la gaine (1) présente la forme d'une bande dont l'une des extrémités porte une languette (8) qui, dans la position finale de manchon, recouvre la deuxième extrémité de la bande constituant la gaine, et dont la largeur est inférieure à la distance entre les arêtes intérieures des deux nervures de guidage (4, 4') directement opposées l'une à l'autre, et en ce que la gaine en forme de bande n'est recouverte que dans la seule zone de la languette (8).

FIG.1

FIG.2

FIG.3